# EUROPÄISCHE PATENTSCHRIFT

(11) **EP 2 134 961 B1**
(45) Veröffentlichungstag und Bekanntmachung des Hinweises auf die Patenterteilung: **14.12.2011**
(21) Anmeldenummer: 08715719.4
(22) Anmeldetag: 09.02.2008
(51) Int. Cl.: F03B 17/06, F03B 13/26

(54) **UNTERWASSERKRAFTWERK UND VERFAHREN ZUM BETRIEB EINES UNTERWASSERKRAFTWERKS**
UNDERWATER POWER STATION AND METHOD FOR OPERATING AN UNDERWATER POWER STATION
CENTRALE ÉLECTRIQUE SOUS-MARINE ET PROCÉDÉ PERMETTANT DE FAIRE FONCTIONNER UNE CENTRALE ÉLECTRIQUE SOUS-MARINE

(30) Priorität: 16.03.2007 DE 102007013293
(43) Veröffentlichungstag der Anmeldung: 23.12.2009
(73) Patentinhaber: Voith Patent GmbH, 89522 Heidenheim (DE)
(72) Erfinder: PERNER, Norman, 89233 Neu-Ulm (DE); HOLSTEIN, Benjamin, 89520 Heidenheim (DE)
(74) Vertreter: Weitzel, Wolfgang
(86) Internationale Anmeldenummer: PCT/EP2008/001002
(87) Internationale Veröffentlichungsnummer: WO 2008/113434

(56) Entgegenhaltungen:
- DE-A1-102005 040 803
- DE-C- 809 179
- GB-A- 2 347 976
- JP-A- 55 072 665

## Beschreibung

Die Erfindung betrifft ein Verfahren und eine Vorrichtung zum Betrieb eines Unterwasserkraftwerks, insbesondere eines in einer Meeresströmung freistehenden Kraftwerks, wobei sie insbesondere ein Verfahren und eine Vorrichtung zur Anpassung an den durch die Tide bedingten Wechsel der Anströmungsrichtung behandelt sowie zum Anfahren einer Wartungsposition dient.

Freistehende, tauchende Energieerzeugungsanlagen können derzeit ab Strömungsgeschwindigkeiten von 2 - 2,5 m/s wirtschaftlich genutzt werden. Hierzu werden Wasserturbinen, beispielsweise mit propellerförmiger Struktur, zur Aufnahme kinetischer Energie aus der Umgebungsströmung an Stützstrukturen befestigt. Je nach Wassertiefe und abhängig von der Beschaffenheit des Gewässergrunds können die Stützstrukturen beispielsweise als fest stehende, auf einem Bodenfundament aufgesetzte Pfeiler ausgebildet sein. Alternativ sind die Stützstrukturen beispielsweise über Seil- oder Kettensysteme lediglich am Meeresboden verankert und bilden in einer bestimmten Wassertiefe treibende schwimmfähige Einheiten.

Einschlägiger Stand der Technik ist bekannt geworden aus DE 80 91 79 C, GB 23 11 566 A, US 2006/0153672 A1 und US 7,105,942 B2.

Charakteristisch für Gezeitenströmungen ist der regelmäßige Wechsel der Strömungsrichtung mit Ebbe und Flut. Demnach ist es zur effizienten Energieausnutzung notwendig, ein gattungsgemäßes freistehendes Unterwasserkraftwerk, das über Gezeitenströmungen angetrieben wird, so auszubilden, dass eine Energieentnahme der Wasserturbine aus der Strömung mit unterschiedlichen Anströmungsrichtungen möglich ist. Hierzu sind in der Hauptsache zwei entgegengesetzt zueinander gerichtete Strömungsrichtungen bei Ebbe und Flut relevant.

Im einfachsten Fall kann zur Anpassung an unterschiedliche Strömungsrichtungen ein verankertes System verwendet werden, das um einen Ankerpunkt frei rotiert. Nachteilig ist jedoch, dass ein großer Bewegungskreis in den meisten Fällen nicht zu vermeiden ist und somit solche Systeme nicht effizient zu einem Energiepark mit mehreren Unterwasserkraftwerken kombiniert werden können. Werden stattdessen ortsfeste Anlagen und insbesondere auf einem Fundament stehende Anlagen verwendet, so gestaltet sich eine Anpassung an veränderliche Anströmungsrichtungen dann einfach, wenn die Turbine als Leeläufer ausgebildet ist. Für diesen Fall wird eine Gelenkverbindung zum Anlenken eines Abstandselements an der Stützstruktur verwendet, wobei am abstromseitigen Ende des Abstandselements die Turbine befestigt ist. Typischerweise ist dies eine propellerförmige Turbine mit zwei oder mehr Turbinenblättern, die rotorblätterförmig ausgebildet sind.

Nachteilig an einem Leeläufer ist jedoch, dass ein gewisser Abschattungseffekt durch die Stützstruktur (Turmschatten) nicht zu vermeiden ist. Vorteilhaft ist aus Effizienzgründen daher die Verwendung eines Luvläufers, das heißt eine Anordnung der Turbine stromaufwärts und mit einem gewissen Abstand zur Stützstruktur, an der diese wenigstens mittelbar befestigt ist. Allerdings besteht für einen Luvläufer keine Möglichkeit zur passiven Nachführung mit einer veränderlichen Anströmungsrichtung, sodass die Stellung der Turbine zur Strömungsrichtung aktiv geführt werden muss. Die hierfür bekannt gewordenen Antriebe umfassen typischerweise aufwändige Drehkonzepte im Bereich des Turms. Hierzu wird beispielhaft auf die DE 10 2005 040 803 A1 verwiesen. Diese sind im Hinblick auf den Wunsch, möglichst wartungsarme Unterwasserkraftwerke aufzubauen, nachteilig, da die zusätzlich verwendeten Getriebe- und Motorkomponenten zu einer erhöhten Ausfallwahrscheinlichkeit führen. Entsprechend resultiert ein erhöhter Aufwand für regelmäßige Inspektionen, was sich im Hinblick auf die erschwerte Zugänglichkeit von Unterwasserkraftwerken schwierig gestaltet.

Daher wurde nach Möglichkeiten gesucht, eine möglichst vereinfachte Anpassung eines freistehenden Gezeitenkraftwerks an eine Anströmung aus unterschiedlichen Richtungen vornehmen zu können. Ein Vorschlag besteht darin, eine rotorförmige Turbine zu verwenden und über eine Blattwinkelverstellung eine Anströmung aus entgegengesetzten Richtungen zu ermöglichen. Durch diese Maßnahme kann zwar auf eine Drehung der gesamten Turbine in die Strömung verzichtet werden, allerdings verlagert sich die Problematik eines erhöhten Wartungsaufwands, aufgrund zusätzlicher beweglicher Komponenten und der diesen zugeordneten Stellantrieben, auf eine ebenso fehleranfällige turbinenseitige Vorrichtung.

Ferner ist es wünschenswert, zusätzlich zur Anpassung an die Strömungsrichtung die Turbine und vorzugsweise eine hiermit verbundene generatorische Einheit in eine Wartungs- oder Montagestellung verfahren zu können. Dies erfordert zum einen ein Herausdrehen aus der Strömung und zum anderen in den meisten Fällen ein Anheben der Turbine-Generatoreinheit an die Wasseroberfläche. Demnach wird zum Einleiten einer Inspektion die Turbine eine bestimmte Relativstellung zur Umgebungsströmung annehmen, sodass auch für diesen Fall die voranstehend genannte Problematik eintritt.

Der Erfindung liegt die Aufgabe zugrunde, ein Verfahren und eine Vorrichtung anzugeben, die es der Turbine eines freistehenden Unterwasserkraftwerks ermöglichen, eine bestimmte Relativlage zur Umgebungsströmung einzunehmen. Insbesondere sollte eine Leistungsaufnahme aus der Umgebungsströmung bei entgegengesetzten Hauptanströmungsrichtungen möglich sein. Darüber hinaus ist es wünschenswert, eine zusätzliche Turbinenstellung mit reduzierter Anströmung, beispielsweise zum Einleiten von Servicemaßnahmen, anfahren zu können. Die voranstehend genannte Aufgabe soll mit einem Verfahren gelöst werden, das mit Hilfe einer robusten, an lange Serviceintervalle angepassten Vorrichtung ausgeführt wird. Besonders bevorzugt ist eine im Wesentlichen wartungsfreie Vorrichtung.

Zur Lösung der voranstehend genannten Aufgabe haben die Erfinder erkannt, dass auf zusätzliche Antriebsmotoren zur aktiven Nachstellung einer Turbine und insbesondere eines Luvläufers relativ zur Anströmungsrichtung verzichtet werden kann, wenn als Antrieb zur Ausführung einer Stellbewegung die ohnehin vorhandene generatorische Einheit Verwendung findet, die für diesen Fall motorisch betrieben wird. Treibt die normalerweise generatorisch verwendete elektrische Maschine im motorischen Betrieb die Turbine an, so werden im Wesentlichen zwei Effekte eintreten. Zum einen entsteht ein Abstützungsmoment der elektrischen Maschine, zum anderen erzeugt die angetriebene Turbine einen Vortrieb. Das Abstützmoment der elektrischen Maschine kann zur Gondeldrehung eingesetzt werden, in den meisten Fällen wird hierfür jedoch ein Zwischengetriebe notwendig sein, sodass bevorzugt auf den Antriebseffekt durch die Turbine zur Einstellung der gewünschten Turbinenausrichtung zurückgegriffen wird.

Bevorzugt wird die Turbine mit einem gewissen Abstand zu einem Drehgelenk, das eine Bewegung in lediglich einer Ebene zulässt, befestigt und so ausgerichtet, dass durch die Vortriebskräfte der angetriebenen Turbine ein Drehmoment um die Achse des Drehgelenks erzeugt wird. Dies gelingt dann, wenn die an der Stützstruktur angebrachte Drehgelenkverbindung einen gewissen seitlichen Abstand zur Kraftwirklinie der Vortriebskraft aufweist, die durch die angetriebene Turbine bewirkt wird. Anders ausgedrückt bedeutet dies, dass ein solches Abstandselement zwischen der Turbine und der Stützstruktur verwendet wird, das die Drehgelenkverbindung um einen bestimmten Abstand transversal zur Kraftwirklinie versetzt anordnet, sodass ein Hebelarm entsteht. Durch diese Maßnahme wird beim Antrieb der Turbine am Ort der Krafteinleitung der Turbine in das Abstandselement eine Tangentialkraftkomponente vorliegen, wodurch bei entsprechender Dimensionierung der Hebelverhältnisse und der Vortriebskraft der angetriebenen Turbine das für die Schwenkbewegung notwendige Drehmoment resultiert.

Das so entstehende Drehmoment auf die Einheit aus Turbine und Abstandselement führt zu einer Schwenkbewegung zwischen einer ersten Stellung und einer zweiten Stellung um die Drehgelenkverbindung. Typischerweise werden die beiden Stellungen entgegengesetzten Anströmungsrichtungen entsprechen. Darüber hinaus wird die Schwenkbewegung bevorzugt in einer Ebene geführt, was durch eine entsprechende Ausbildung der Drehgelenkverbindung für das Abstandselement an der Stützstruktur sichergestellt werden kann. Wird der Drehgelenkverbindung eine Drehachse zugeordnet, so kann diese gemäß einer ersten Variante vertikal verlaufen, sodass die Schwenkbewegung im Wesentlichen in einer horizontalen Ebene verläuft. Eine andere Ausgestaltung besteht darin, die Drehgelenkverbindung so auszulegen, dass die Gelenkachse horizontal verläuft, und zwar in eine Richtung, die senkrecht zu den beiden entgegengesetzten (antiparallelen) Hauptanströmungsrichtungen (bei Ebbe und Flut) verläuft. Demnach wird für diesen Fall die Einheit aus Turbine und Abstandselement in einer Vertikalebene verschwenkt, die die Gelenkachse als Flächennormale aufweist. Für diese Ausgestaltung wird die Schwenkbewegung zunächst zu einer Anhebung der Turbine bis zu einem Scheitel führen, wonach sie wieder zur zweiten Stellung abgesenkt wird. Gemäß einer Ausgestaltung der Erfindung kann im Bereich dieses Scheitels eine dritte Stellung vorgesehen sein, die beispielsweise zu Servicezwecken angefahren wird. Wird beispielsweise eine rotorförmige Turbine verwendet, wird sie in dieser Stellung eine senkrecht gestellte Nabe und eine horizontale Orientierung der Rotorblätter aufweisen. Von dieser Stellung aus kann beispielsweise eine Trennung vom Abstandselement vorgenommen werden, um ein Anheben der rotorförmigen Turbine an die Wasseroberfläche zu ermöglichen. Alternativ kann die Schwenkbewegung in der Vertikalebene so ausgeführt werden, dass die Turbine einen Halbkreis durch den unteren Scheitelpunkt vollzieht. Der Vorteil einer solchen Schwenkbewegung nach unten ist darin zu sehen, dass die Turbine bei Bedarf auf diese Weise beispielsweise zur Durchfahrt eines Schiffs mit großem Tiefgang aus einer Fahrrinne geschwenkt werden kann.

Ferner kann das zwischen dem Befestigungspunkt der Turbine und der Drehgelenkverbindung an der Stützstruktur vorgesehene Abstandselement neben der voranstehend genannten Aufgabe zur Schaffung einer Exzentrizität als zusätzliche Funktion der Aufnahme von Systemkomponenten der Energieerzeugungsanlage dienen. Bevorzugt wird die generatorisch und motorisch betreibbare elektrische Maschine in das Abstandselement aufgenommen sowie weitere Komponenten, eventuell Getriebe, die den Antriebsstrang zwischen der Turbine und der elektrischen Maschine bilden. Folglich besteht eine bevorzugte Ausführungsform darin, das Abstandselement als Gondel mit einer darin angeordneten elektrischen Maschine auszuführen.

Gemäß eines Ausführungsbeispiels der vorliegenden Erfindung erfolgt der Übergang zwischen der ersten Stellung und der zweiten Stellung der Turbine jeweils als Hin- und Rückbewegung und nicht als Vollkreis, um eine Verdrillung von Verbindungskabeln zwischen einer im Abstandselement integrierten elektrischen Maschine und der Weiterführung der Kabelverbindung in der Stützstruktur zu vermeiden. Dieser Umstand ist sowohl für einen Luvläufer wie auch für einen Leeläufer wichtig, sodass auch für einen Leeläufer anstatt einer passiven Stömungsnachführung eine kontrollierte, aktive Vor- und Zurückbewegung mittels des erfindungsgemäßen Verfahrens, respektive der erfindungsgemäßen Vorrichtung bevorzugt wird. Für die Hin- und Herbewegung zwischen der ersten Stellung und der zweiten Stellung ist es notwendig, die Kraftrichtung durch die Turbine umzukehren, was durch die jeweils entgegengesetzte Turbinendrehung gelingt.

Gemäß einer weiteren bevorzugten Ausgestaltung sind an den anzufahrenden Stellungen für die Einheit aus Turbine und Abstandselement jeweils mechanische Anschläge vorgesehen. Diese können zusätzlich eine Dämpfungsvorrichtung umfassen. Im Falle einer Hin- und Rückbewegung zwischen einer ersten Stellung und einer zweiten Stellung können ortsfeste mechanische Anschläge verwendet werden. Liegt zwischen diesen beiden Stellungen im Schwenkkreis eine dritte Stellung, die von der Einheit aus Abstandselement und Turbine überstrichen wird, und welche beispielsweise nur in Sonderfällen, etwa bei der Ausführung einer Servicemaßnahme oder für das Einschwenken der Turbine in einer Neutralstellung, angefahren wird, so ist es notwendig, einen mechanischen Anschlag in diesem Bereich so auszubilden, dass dieser aus dem Schwenkbereich der Turbine herausgefahren werden kann. Weiterhin sind bevorzugt an den Anschlägen Verriegelungselemente vorzusehen, die ein Zurückschwenken während des generatorischen Betriebs, bei dem die Turbine der Umgebungsströmung kinetische_Energie entnimmt, sicher verhindern. Diese Verriegelungselemente können entweder separat ausgebildet werden oder mit den mechanischen Anschlägen integrale Baueinheiten bilden.

Gemäß einer weiteren Ausgestaltung der Erfindung wird eine Bremsvorrichtung mit Wirkung auf die Schwenkbewegung vorgesehen. Im einfachsten Falle wird dies eine Bremse in der Drehgelenkverbindung sein. Der Vorteil einer solchen Bremsvorrichtung besteht darin, dass die Schwenkbewegung besser kontrolliert werden kann, sodass dem von der angetriebenen Turbine und der erfindungsgemäßen Hebelarmanordnung des Abstandselements bewirkte Schwenkmoment nicht nur Trägheits- und Strömungskräfte entgegenstehen, sondern dass die Schwenkbewegung im Wesentlichen gegen ein zu steuerndes beziehungsweise zu regelndes Bremsmoment vollzogen wird. Demnach ist es möglich, insbesondere die Endphase, bevor die neue Sollstellung erreicht wird, möglichst sanft zu durchfahren.

Gemäß einer Weitergestaltung kann bei entsprechender Auslegung der Bremsvorrichtung gänzlich auf Anschläge verzichtet werden. Diese Funktion kann durch eine vom Schwenkwinkel abhängige Einstellung des Bremsmoments ersetzt werden. Weiterhin kann anstatt der Verriegelungselemente ein Festsetzen über die Bremsvorrichtung erfolgen. Allerdings wird bevorzugt, solche Verriegelungselemente beim Erreichen der Sollposition zusätzlich als redundante Sicherungsmaßnahmen zu verwenden.

Für ein weiteres Ausführungsbeispiel der Erfindung werden zwei oder mehr verbundene Turbinen an einer gemeinsamen Stützstruktur verwendet, die ebenfalls als Luvläufer ausgebildet sind. Die Verbindung der Turbinen kann über einen Tragbalken erfolgen, wobei der Anlenkpunkt an der Stützstruktur sich beispielsweise in der Mitte des Tragbalkens befindet. Zur Drehung einer solchen Anordnung um den Anlenkpunkt wird mindestens eine der Turbinen angetrieben, die sich in einem bestimmten Abstand zum Anlenkpunkt befindet. Alternativ können mehrere oder alle Turbinen angetrieben werden, wobei deren Schubrichtungen, respektive deren Drehrichtungen, von der jeweiligen Relativlage zum Anlenkpunkt abhängen. Alternativ kann bei der genannten Verbindung mehrerer Turbinen mittels eines Tragbalkens die Drehung um die Längsachse des Tragbalkens erfolgen.

Nachfolgend wird die Erfindung anhand von Figuren genauer beschrieben. In diesen ist im Einzelnen Folgendes dargestellt:
- Figur 1: zeigt ein Ausführungsbeispiel für ein erfindungsgemäßes Unterwasserkraftwerk in Draufsicht, wobei zwei Stellungen für unterschiedliche Anströmungsrichtungen dargestellt sind.
- Figur 2: zeigt das erfindungsgemäße Prinzip zur Erzeugung eines Moments zur Ausführung einer Schwenkbewegung der Turbineneinheit eines erfindungsgemäßen Unterwasserkraftwerks.
- Figur 3: zeigt schematisch vereinfacht eine mögliche Ausgestaltung für eine versenkbare Baueinheit zur Realisierung eines Anschlags für die Schwenkbewegung und eines Verriegelungselements.
- Figur 4: zeigt schematisch vereinfacht eine Seitenansicht des Unterwasserkraftwerks aus Figur 1.
- Figur 5: zeigt in einer Seitenansicht eine Ausgestaltung für eine Schwenkbewegung um eine horizontale Schwenkachse.
- Figuren 6a, 6b: zeigen die Anordnungen mehrerer Turbinen auf einem um die Längsachse drehbaren Tragbalken in zwei verschiedenen Stellungen.
- Figur 7: zeigt eine weitere Ausführungsform der Erfindung mit zwei Turbinen und einer Mehrzahl von Drehgelenksverbindungen.
- Figuren 8a, 8b: zeigen mögliche Schwenkbewegungen für die in Figur 7 dargestellte Ausführung.

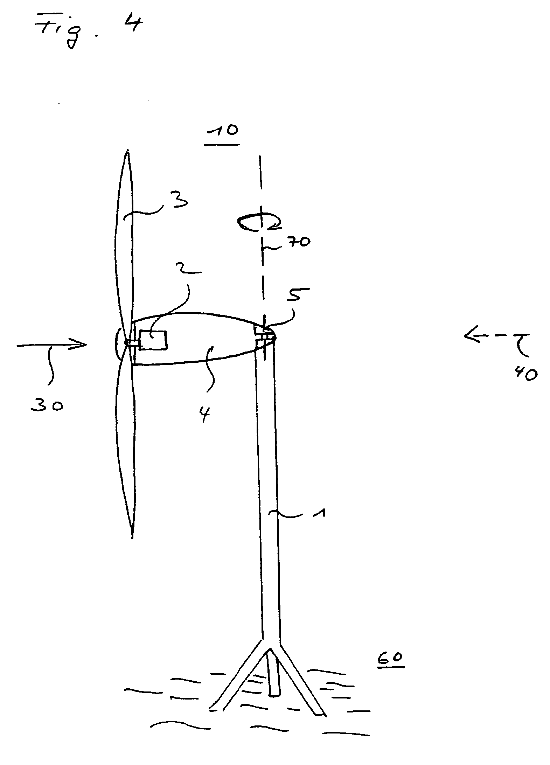

In Figur 4 ist ein gattungsgemäßes freistehendes Unterwasserkraftwerk schematisch vereinfacht dargestellt, das eine Stützstruktur 1 in Form eines Tragpfostens und eine auf dem Gewässergrund 60 verankerte Fundamentierung aufweist. Für die vorliegende Anmeldung können Stützstrukturen 1 auch anders gestaltet sein, beispielsweise als Traggitterstrukturen oder als verankerte schwimmfähige Einheiten, soweit sie dazu geeignet sind, eine schwenkbar ausgebildete Turbine 3 mit einem gewissen Abstand zu einem Anlenkpunkt zu tragen.

In Figur 4 ist eine erste Anströmungsrichtung 30 für die Turbine 3 dargestellt. Gegenüber dieser ersten Anströmungsrichtung 30 befindet sich die Einheit aus Turbine 3 und Abstandselement 4 für die dargestellte Betriebssituation in der bevorzugten Luvstellung für den generatorischen Betrieb des Unterwasserkraftwerks.

Als Turbine 3 ist in Figur 4 eine rotorförmige Struktur mit zwei Propellerblättern gezeigt. Diese sind besonders bevorzugt starr mit einer Rotornabe verbunden. Allerdings kann die vorliegende Erfindung auch mit anderen Turbinenvarianten, beispielsweise Vertikalturbinen oder Rotoren mit einer Pitcheinstellung, ausgeführt werden.

Zwischen der Turbine 3 und der Stützstruktur 1 befindet sich ein Abstandselement 4. Dieses Abstandselement 4 ist vorteilhafterweise in Form einer Gondel ausgebildet und kann zur Aufnahme eines Generators dienen. Zur Ausführung der Erfindung wird der Generator bei einer Schwenkbewegung motorisch betrieben, sodass nachfolgend der allgemeine Begriff einer elektrischen Maschine 2 verwendet wird, die generatorisch und motorisch betrieben werden kann. Weitere Ausführungsvarianten sind denkbar, bei denen die elektrische Maschine 2 nicht in unmittelbarer Nähe zur Turbine und damit nicht im Abstandselement 4 untergebracht ist, stattdessen wird diese in die Stützstruktur 1 aufgenommen und es wird eine mechanische Triebverbindung über Getriebe- und Gelenkstrukturen zwischen der Turbine 3 und der elektrischen Maschine 2 hergestellt. Alternativ kann zwischen der Turbine 3 und der elektrischen Maschine 2 ein Übertragungselement zwischengeschaltet werden, das die Triebverbindung mittelbar realisiert, etwa über einen hydrostatischen Zwischenkreis.

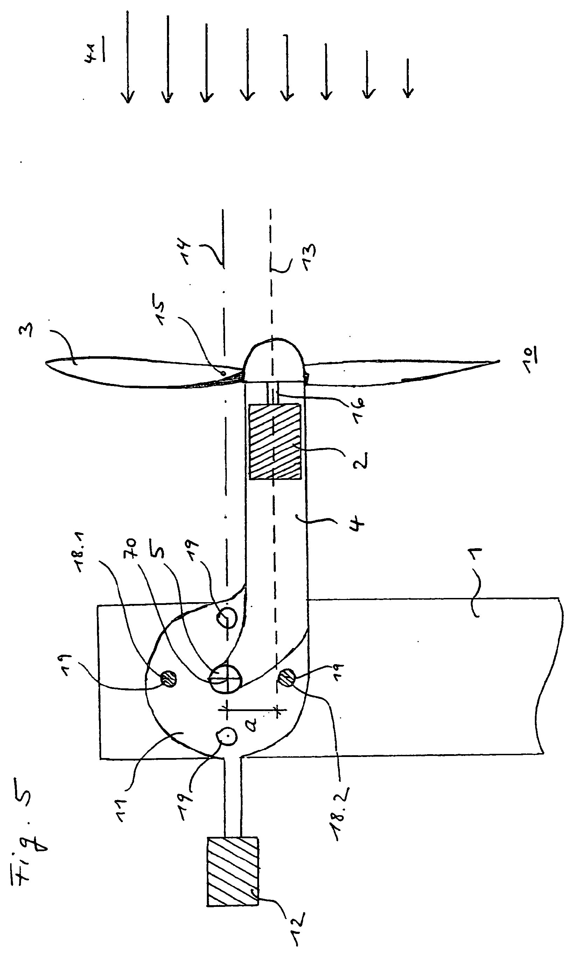

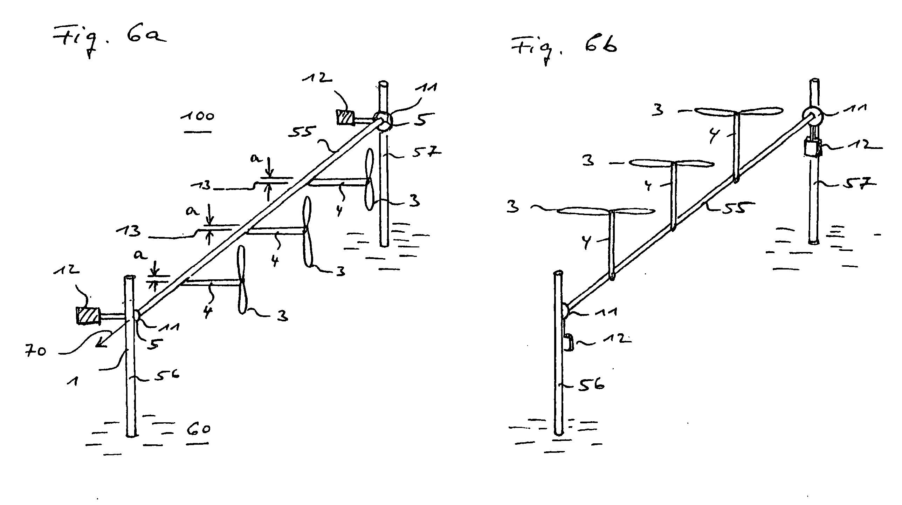

Zur Anpassung des Unterwasserkraftwerks an eine sich verändernde Anströmungsrichtung, die in Figur 4 gestrichelt als zweite Anströmungsrichtung 40 dargestellt ist, erfolgt erfindungsgemäß eine Schwenkbewegung der Einheit aus Turbine 3 und Abstandselement 4 um eine Drehgelenkverbindung 5 zwischen dem Abstandselement 4 und der Stützstruktur 1. Diese Schwenkbewegung wird in einer Ebene geführt, vorliegend der Horizontalebene, wobei die hierfür notwendigen Führungselemente durch die Art der Ausbildung der Drehgelenkverbindung 5 geschaffen werden können. Entsprechend wird der Drehgelenkverbindung 5 eine Gelenkachse 70 zugeordnet, die für die vorliegende Ausführung vertikal verläuft. Alternativ kann die Schwenkbewegung in einer Vertikalebene erfolgen, was Gegenstand der Ausführungsvarianten gemäß Figur 5, 6a, 6b ist.

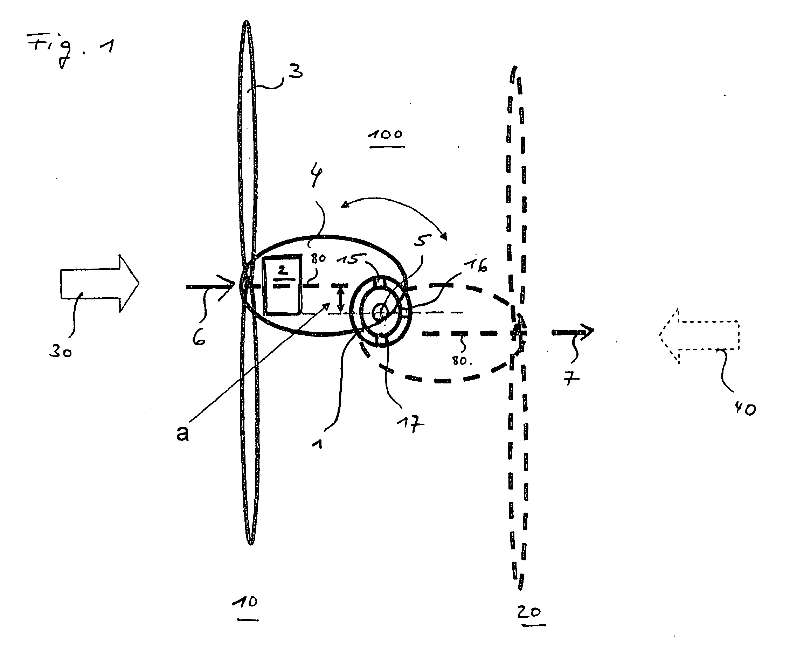

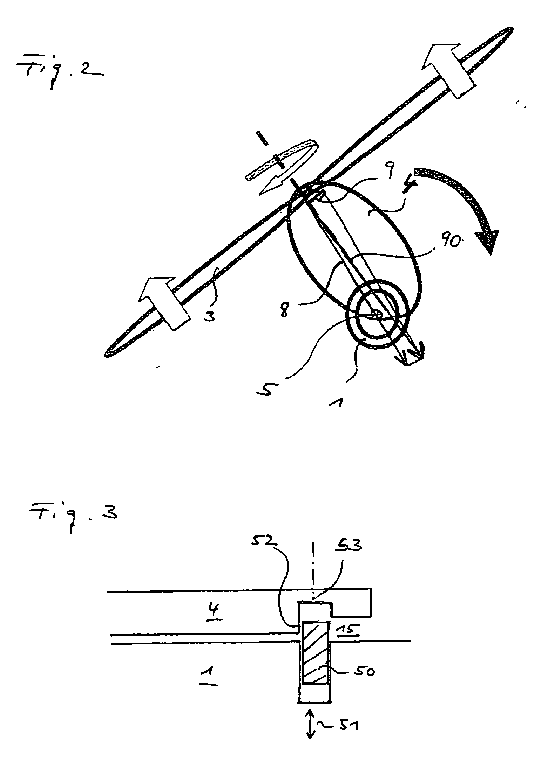

Zur Ausführung einer Schwenkbewegung treibt die motorisch betriebene elektrische Maschine 2 die Turbine 3 an. Der folglich durch die Turbine 3 erzeugte Vortrieb in Form einer Zug- oder Schubkraft in Verbindung mit einem Abstandselement 4, das einen zur Kraftwirklinie der Vortriebskraft 90 seitlich versetzten Anlenkpunkt an der Stützstruktur 1 aufweist, erzeugt ein Schwenkmoment um den Anlenkpunkt. Dies wird aus der schematisch vereinfachten Skizze in Figur 1 deutlich. Gezeigt wird das Unterwasserkraftwerk aus Figur 4 in Draufsicht, wobei eine Einheit aus Turbine 3 und Abstandselement 4 über eine Drehgelenkverbindung 5 mit der Stützstruktur 1 verbunden ist. Der Anlenkpunkt am Abstandselement 4 ist seitlich zur Kraftwirklinie 80 verschoben und zwar um den seitlichen Versatz a. Hierbei gibt die Kraftwirklinie 80 die Richtung der beim Antrieb der Turbine 3 entstehenden Vortriebskräfte an. Wesentlich ist, dass durch den seitlichen Versatz a eine Tangentialkraftkomponente 9 entsteht, was in Figur 2 anhand einer vektoriellen Zerlegung dargestellt ist. Skizziert ist eine angetriebene Turbine 3, die eine Vortriebskraft 90 erzeugt, wobei die Vortriebskraft 90 in eine Radialkraftkomponente 8 und eine Tangentialkraftkomponente 9 vektoriell zerlegbar ist. Die Radialkraftkomponente 8 wirkt entlang der Verbindungslinie zwischen dem Punkt der Krafteinleitung durch die Turbine 3 am Abstandselement 4 und der Drehgelenkverbindung 5. Die senkrecht hierzu stehende Tangentialkraftkomponente 9 in Verbindung mit dem Hebelarm, gebildet durch den Abstand zwischen Kraftangriffspunkt und Drehpunkt, führt zu einem Schwenkmoment, das in Figur 2 über einen Pfeil im Fettdruck dargestellt ist.

Tritt ein Wechsel von der ersten Anströmungsrichtung 30 zur zweiten Anströmungsrichtung 40 auf, so ist es notwendig, die Einheit aus Turbine 3 und Abstandselement 4 von der ersten Stellung 10 in die zweite Stellung 20 zu bringen. Für die in Figur 1 gezeigte Situation wird die Turbine 3 für den Wechsel von der ersten Stellung 10 zur zweiten Stellung 20 zur Erzeugung der ersten Vortriebsrichtung 6 angetrieben. Für die Rückbewegung von der zweiten Stellung 20 zu der ersten Stellung 10 ist es notwendig, für die zweite Vortriebsrichtung 7 die Turbine 3 im entgegengesetzten Drehsinn umlaufen zu lassen.

Bevorzugt wird jeweils ein mechanischer Anschlag vorgesehen, der das Ende einer Schwenkbewegung festlegt. Diese mechanischen Anschläge können ortsfeste Vorrichtungen sein, gegen die ein Teil des Außenbereichs des Abstandselements 4 oder eine Komponente der Drehgelenkverbindung 5 mit Ende der Schwenkbewegung anliegt. Besonders bevorzugt wird eine Ausgestaltung der mechanischen Anschläge, die zum einen in die Stützstruktur 1 aufgenommen sind und zum anderen für jede der angefahrenen Stellungen der Einheit aus Turbine 3 und Abstandselement 4 der gleiche Anlagepunkt, das heißt der gleiche Bereich auf dessen Außenseite, in Wechselwirkung mit dem mechanischen Anschlag tritt. Darüber hinaus ist es wünschenswert, zusätzlich zur reinen mechanischen Anschlagsfunktion mit dem Erreichen der gewünschten Stellung eine Verriegelung vornehmen zu können. Eine die voranstehend genannten Forderungen erfüllende, vorteilhafte Ausgestaltung verwendet versenkbare Bolzen 50 gemäß der Darstellung in Figur 3. Dies hat den Vorteil, dass der Bereich des Anschlags- und Verriegelungselements mit einem vollständig eingefahrenen Bolzen 50 von der bewegten Einheit ungehindert überstrichen werden kann. Entsprechend wird dem versenkbaren Bolzen 50 ein Bolzenantrieb 51 zugeordnet, der den Bolzen aus der ihm zugeordneten Ausnehmung in der Stützstruktur 1 herausbewegen kann. Wird das entsprechende Gegenstück, beispielsweise im Abstandselement 4, so ausgebildet, dass eine Anschlagsfläche 52 vorliegt, so wird der versenkbare Bolzen 50 für eine erste ausgefahrene Stellung gemäß der Darstellung in Figur 3 als mechanischer Anschlag dienen. Wird er weiter ausgefahren, so kann er beispielsweise zur Verriegelung in eine Bohrung 53 im Gegenstück, typischerweise dem Abstandselement 4, eingeschoben werden, wodurch eine Arretierung der erreichten Stellung bewirkt wird.

Zusätzlich kann an der Schwenkeinrichtung eine Vorrichtung vorgesehen sein, die dazu dient, in der Endphase der Schwenkbewegung die Zielstellung sanft anzufahren. Im einfachsten Fall wird eine Dämpfungseinrichtung, z.B. in Form gummielastischer Elemente oder hydraulischer Dämpfer, den mechanischen Anschlägen zugeordnet. Zusätzlich oder alternativ kann eine die Schwenkbewegung steuernde oder regelnde Bremseinrichtung vorgesehen sein.

Für die in Figur 1 dargestellte exemplarische Ausgestaltung sind Anschlag- und Verriegelungselemente an den mit den Bezugszeichen 17.1, 17.2und 17.3 gezeigten Stellen an der Stützstruktur angeordnet. Hierbei ist das Anschlags- und Verriegelungselement 17.1 der ersten Stellung 10 und das Anschlags- und Verriegelungselement 17.3 der zweiten Stellung 20 zugeordnet. Nach der Verriegelung ist das Element aus Turbine 3 und Abstandselement 4 an zwei Punkten an der Stützstruktur 1 befestigt. Zum ersten ist dies die Drehgelenkverbindung 5, zum anderen das genannte Anschlags- und Verriegelungselement.

Gemäß einer Weitergestaltung sind mehrere durch die Schwenkbewegung erreichbare Stellungen der Einheit aus Turbine 3 und Abstandselement 4 durch die Anordnung mehrerer vorzugsweise verschwenkbarer Anschlags- und Verriegelungselemente festlegbar. Dies kann zum einen der verfeinerten Anpassung an eine sich verändernde Anströmungsrichtung dienen. Zum anderen kann zwischen den beiden Hauptstellungen für den generatorischen Betrieb eine zusätzliche zwischenliegende Stellung für den Servicefall vorgesehen sein. Exemplarisch ist hierzu in Figur 1 das Anschlags- und Verriegelungselement 17.2 dargestellt. Wird die zugeordnete Stellung der Einheit aus Turbine 3 und Abstandselement 4 angefahren, so liegt bei einer Verschwenkung um eine vertikal verlaufende Gelenkachse die Nabe der Turbine 3 am Anschlags- und Verriegelungselement 17.2 im Wesentlichen senkrecht zu den Hauptanströmungsrichtungen (erste und zweite Anströmungsrichtung 30, 40), sodass eine Wartung vorgenommen werden kann. Die im Einzelnen hierfür notwendigen Komponenten sind in Figur 1 nicht dargestellt.

Mehrere Anschlags- und Verriegelungselemente können auch dazu verwendet werden, eine Nachführung für die Festlegung der ersten Anströmungsrichtung 30 und der zweiten Anströmungsrichtung 40 zur Leistungsoptimierung vornehmen zu können, falls vor der Aufstellung der Energieerzeugungsanlage die Strömungsverhältnisse nicht exakt vermessen wurden. Gemäß einer alternativen Gestaltung ist es denkbar, die Anschlags- und Verriegelungselemente über ein wiederum drehbares Element mit der Stützstruktur zu verbinden, sodass beim Einrichten des Unterwasserkraftwerkes 100 eine Möglichkeit zur Justage der Stellung dieser Komponenten und damit eine Anpassung an die gegebenen Strömungsverhältnisse möglich ist. Werden die genannten mechanischen Anschläge durch eine Bremsvorrichtung ersetzt, so kann die erste Stellung 10 für die erste Anströmungsrichtung 30 und die zweite Stellung 20 für die zweite Anströmungsrichtung 40 im Wesentlichen frei gewählt werden. Darüber hinaus kann eine verfeinerte Anpassung beispielsweise an ein elliptisches Leistungsprofil der Umgebungsströmung vollzogen werden, indem alle möglichen Stellungen im Vollkreis angefahren werden können.

Figur 5 zeigt eine erfindungsgemäße Ausgestaltung, bei der die der Drehgelenkverbindung 5 zugeordnete Gelenkachse 70 horizontal verläuft. Demnach schwenkt die Einheit aus Turbine 3 und Abstandselement 4 um den durch die Gelenkachse 70 vorgegebenen Drehpunkt an der Drehgelenkverbindung zur Stützstruktur 1 in einer vertikalen Ebene.

Besonders bevorzugt wird die in Figur 5 gezeigte Variante der Erfindung im Hinblick auf eine Reduktion statischer Momente im generatorischen Betrieb. Im vorliegenden Fall wird eine asymmetrische Anströmungsrichtung der Turbine 3 betrachtet. Hierzu ist exemplarisch ein Strömungsprofil 41 dargestellt, welches asymmetrisch zur Turbinenwelle 16 ist. Ein solches Strömungsprofil 41 tritt aufgrund des endlichen Abstands der Turbine 3 zum Gewässergrund auf. Demnach wird der obere Teil der Turbine 3 schneller angeströmt als die unterhalb der durch die Turbinenwelle 16 vorgegebenen Achse liegenden Bereiche. Als Folge wird sich ein außermittiger Druckpunkt 15 entsprechend des vorliegenden Anströmungsprofils 41 einstellen und die Kraftwirklinie der Turbinenkraft im generatorischen Betrieb 14 wird nicht mit dem Verlauf der Turbinenwelle 16 übereinstimmen. Gemäß der in Figur 5 skizzierten Anordnung wird die Drehgelenkverbindung 5 zur Anlenkung des Abstandselements 4 an der Stützstruktur 1 in den Bereich verlegt, an dem die Kraftwirklinie der Turbinenkraft im generatorischen Betrieb 14 verläuft. Bei einem wechselnden Strömungsprofil 41 wird allerdings der Druckpunkt 15 wandern, sodass nur im Idealfall die Kraftwirklinie der Turbinenkraft im generatorischen Betrieb 14 exakt durch den Drehpunkt der Drehgelenkverbindung 5 läuft. Allerdings wird im allgemeinen Fall die Charakteristik des Strömungsprofils 41 erhalten bleiben, sodass durch die seitliche Beabstandung der Drehgelenkverbindung 5 zur Turbinenwelle 16 im generatorischen Betrieb das auf die Drehgelenkverbindung 5 wirkende Drehmoment verringert wird.

Darüber hinaus kann gemäß einer bevorzugten Ausgestaltung ein Gegengewicht 12 so angeordnet werden, dass das aufgrund der Gewichtskraft der Turbine 3 und des Abstandselements 4 sowie der darin aufgenommenen Komponenten, beispielsweise eine elektrische Maschine 2, resultierende Drehmoment an der Drehgelenkverbindung 5 ausbalanciert wird. Dies reduziert die während des generatorischen Betriebs abzustützenden statischen Momente und ermöglicht gleichzeitig aufgrund der ausbalancierten Gewichtsverteilung eine Vereinfachung von Schwenkbewegungen.

Weiterhin ist in Figur 5 der Verlauf der Kraftwirklinie der Vortriebskraft 13 im Falle des Antriebs der Turbine 3 durch die elektrische Maschine 2 dargestellt. Diese Kraftwirklinie der Vortriebskraft 13 stimmt für die gewählte propellerförmige Ausführung der Turbine 3 mit der Achse der Turbinenwelle 16 überein. Die Drehgelenkverbindung 5 weist einen lotrechten Abstand zur Kraftlinie der Vortriebskraft 13 auf. Dieser ist in Figur 5 als seitlicher Versatz a eingezeichnet. Wie voranstehend dargelegt, wird bevorzugt dieser seitliche Versatz a so ausgelegt, dass gleichzeitig die zeitlich gemittelte Lage der Kraftwirklinie der Turbinenkraft im generatorischen Betrieb 14 durch den Drehpunkt der Drehgelenkverbindung 5 läuft. Anstatt oder zusätzlich zur zeitlichen Mittelung kann eine leistungsgewichtete Mittelung zur Bestimmung der mittleren Lage des Druckpunkts 15 und der damit verbundenen Kraftwirklinie der Turbinenkraft im generatorischen Betrieb 14 als Designparameter für den seitlichen Versatz a verwendet werden.

Weiterhin ist in Figur 5 als mögliche Ausgestaltung der Drehgelenkverbindung 5 ein scheibenförmiges Element 11 dargestellt, das zum einen dazu dient, eine Schwenkbewegung auf eine Bewegung in einer Schwenkebene festzulegen. Zum anderen ist es möglich, die Anschlags- und Verriegelungselemente 18.1, 18.2 einzurasten, die in einem bestimmten Abstand zur Gelenkachse 70 an der Stützstruktur 1 vorgesehen sind und welche in entsprechend geformte Gegenstücke, typischerweise Ausnehmungen 19, im scheibenförmigen Element 11 eingreifen. Aus der in Figur 5 skizzierten Anordnung der Ausnehmungen 19 ist ersichtlich, dass neben der dargestellten ersten Stellung 10 eine zweite Stellung (nicht dargestellt) der Turbine 3 eingestellt werden kann, die gegenüber der ersten Stellung 10 um 180° gedreht ist. Zusätzlich können Stellungen bei 90° und 270° eingestellt werden, wobei insbesondere die Stellung am oberen Scheitelpunkt mit einer nach oben gestellten Turbine 3 eine Servicestellung zur Ausführung von Wartungsarbeiten darstellt. Dies wird nachfolgend anhand einer Ausgestaltung einer gattungsgemäßen Energieerzeugungsanlage mit mehreren über einen Tragbalken verbundenen Turbinen 3 dargestellt.

Figur 6A zeigt die Anordnung von drei Turbinen 3 auf einer gemeinsamen Stützstruktur 1. Diese umfasst einen ersten Pfosten 56, einen zweiten Pfosten 57 und einen Tragbalken 55, an dem die Einheiten aus Abstandselement 4 und Turbine 3 befestigt sind. Hierbei ist erfindungsgemäß die Befestigung wiederum so gewählt, sodass für jede Turbine 3 die Kraftwirkungslinie der Vortriebskraft 13 einen seitlichen Versatz a zur Mittenachse des Tragbalkens 55 aufweist. Der Tragbalken 55 wird über die an seinen Enden angebrachten und jeweils dem ersten Pfosten 56 und dem zweiten Pfosten 57 zugeordneten Drehgelenkverbindungen 5 drehbar gelagert. Hierbei stimmt die Gelenkachse 70 mit der Mittenachse des Tragbalkens 55 überein. Erfindungsgemäß wird eine Drehung um diese Gelenkachse 70 dadurch erreicht, dass wenigstens eine Turbine 3 durch die ihr zugeordnete elektrische Maschine 2 motorisch angetrieben wird und aufgrund der versetzt angeordneten Einheit aus Abstandselement 4 und Turbine 3 für diese ausgebildete Turbine 3 ein Schwenkmoment um die Gelenkachse 70 erfolgt. Hierbei kann der seitliche Versatz a für die einzelnen Einheiten unterschiedlich gewählt werden. Darüber hinaus kann der einer bestimmten Einheit aus Turbine 3 und Abstandselement 4 zugeordnete, seitlichen Versatz a nach oben oder unten in Bezug auf die Mittenachse des Tragbalkens 55 ausgebildet sein.

Gemäß der in Figur 6A bezeichneten Ausführung ist die Drehgelenkverbindung 5 wiederum mit einem scheibenförmigen Element 11 versehen, wobei dieses Element am ersten Pfosten 56 und am zweiten Pfosten 57 angebracht ist. Darüber hinaus werden zwei Gegengewichte 12 vorgesehen, die wiederum möglichst nahe am ersten Pfosten 56 beziehungsweise dem zweiten Pfosten 57 angeordnet sind. Diese Anordnung ist im Hinblick auf eine möglichst ungehinderte Anströmung der Turbinen 3 und zur Reduktion der Biegelast auf den Tragbalken 55 von Vorteil.

Figur 6B zeigt die Ausgestaltung aus Figur 6A nachdem ein Schwenk in eine Servicestellung ausgeführt wurde. Das heißt, die Wellen der Turbinen 3 stehen vertikal und die Turbinen 3 befinden sich im oberen Scheitelpunkt. In dieser Stellung werden die Turbinen 3 möglichst nahe an die Wasseroberfläche herangeführt. Zusätzlich kann eine Vorrichtung vorgesehen sein, um die Turbinen 3 aus dieser Stellung noch heraus anzuheben. Dies kann beispielsweise durch eine vertikal verfahrbare Einheit an der Stützstruktur 1 realisiert werden oder die Abstandselemente 4 werden für diesen Fall verlängert oder es findet eine Trennung der Turbine 3 vom zugeordneten Abstandselement 4 in Verbindung mit einem Auftreiben der Turbine 3 zur Wasseroberfläche statt. Alternativ ist auch eine Trennung am Anlenkpunkt des jeweiligen Abstandselements 4 zum Tragbalken 55 vorzunehmen.

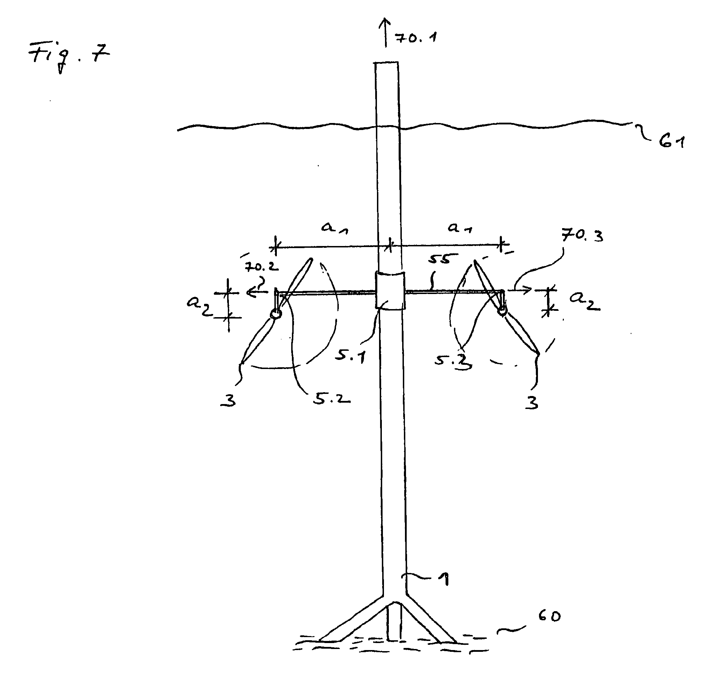

Eine weitere Ausgestaltung der Erfindung ist in Figur 7 dargestellt. Skizziert werden zwei Turbinen 3 mit propellerförmiger Struktur, deren Flugkreise im normalen generatorischen Betrieb in die Papierebene liegen. Befestigt werden die Turbinen 3 an einer Stützstruktur 1, die als ein auf den Gewässergrund 60 stehender Pfosten ausgebildet ist, dessen oberes Ende über die Wasseroberfläche 61 hinausragt.

Zur Anpassung an eine wechselnde Strömungsrichtung müssen die Turbinen 3 um eine erste Drehachse 70.1, die längs der säulenförmigen Stützstruktur 1 verläuft, gedreht werden. Diese Drehung wird um eine erste Drehgelenkverbindung 5.1 erfolgen, wobei das hierfür notwendige Schwenkmoment erfindungsgemäß durch den motorischen Antrieb wenigstens einer Turbine 3 in Verbindung mit einer exzentrischen Anlenkung derselben mittels des ersten seitlichen Versatzes a₁ relativ zum ersten Drehgelenk 5.1 entsteht.

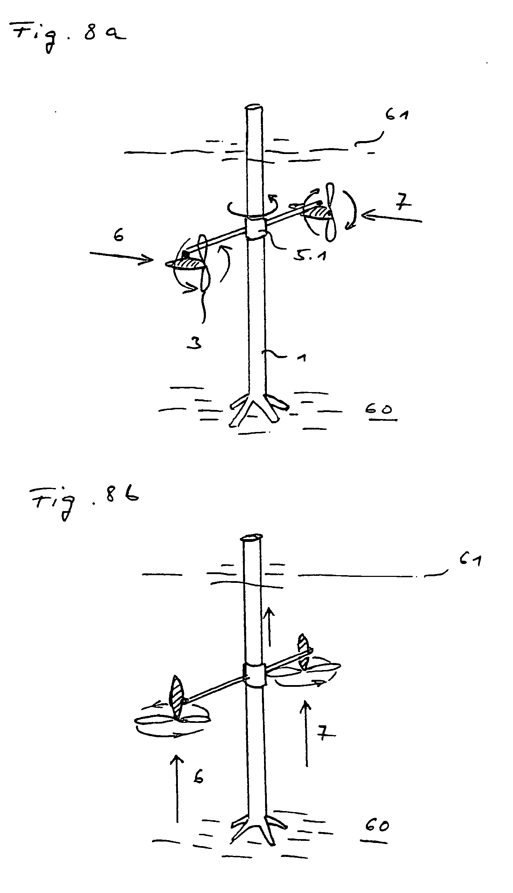

Eine solche Drehung ist in Figur 8A skizziert. Zusätzlich liegen für die beiden Turbinen 3 jeweils eine zweite und eine dritte Drehachse 70.2 und 70.3 und eine zweite und dritte Drehgelenkverbindung 5.2, 5.3 vor. Gegenüber diesen Anlenkpunkten sind die Turbinen 3 wiederum zur Erzeugung eines Hebels um den zweiten seitlichen Versatz a₂ exzentrisch angeordnet. Nachdem voranstehend beschriebenen erfindungsgemäßen Verfahren ist es entsprechend dieser Anordnung möglich, jede einzelne der Turbinen 3 in einer Ebene zu verschwenken, die senkrecht zur Papierebene steht. Dies ist in Figur 8B skizziert. Damit kann bewirkt werden, dass die Turbinen so gestellt werden, dass beim motorischen Antrieb derselben die Vortriebskraft vertikal gerichtet ist, wobei eine solche Einstellung dazu verwendet werden kann, die gesamte Turbineneinheit entlang der vertikalen Stützstruktur 1 nach oben zur Wasseroberfläche 61 zu verfahren, um eine Wartung oder eine Reparatur ausführen zu können.

Das erfindungsgemäße Prinzip, die Antriebskraft für eine Schwenkbewegung der Turbine 3 durch einen motorischen Betrieb der der Turbine 3 zugeordneten elektrischen Maschine 2 zu bewirken und zur Erzeugung eines Schwenkmoments eine Baueinheit aus Abstandselement 4 und Turbine 3 exzentrisch bezüglich einer Drehgelenkverbindung 5 anzuordnen, kann auf unterschiedliche Art im Rahmen des Schutzumfangs der nachfolgenden Ansprüche modifiziert werden, um die Turbine 3 zur optimierten Leistungsaufnahme oder zum Anfahren bestimmter Servicepunkte aktiv positionieren zu können.

### Bezugszeichenliste

- 1: Stützstruktur
- 2: elektrische Maschine
- 3: Turbine
- 4: Abstandselement
- 5: Drehgelenkverbindung
- 5.1: erste Drehgelenkverbindung
- 5.2: zweite Drehgelenkverbindung
- 5.3: dritte Drehgelenkverbindung
- 6: erste Vortriebsrichtung
- 7: zweite Vortriebsrichtung
- 8: Radialkraftkomponente
- 9: Tangentialkraftkomponente
- 10: erste Stellung
- 11: scheibenförmiges Element
- 12: Gegengewicht
- 13: Kraftwirklinie der Vortriebskraft
- 14: Kraftwirklinie der Turbinenkraft im generatorischen Betrieb
- 15: Druckpunkt
- 16: Turbinenwelle
- 17.1: Anschlags- und Verriegelungselement
- 17.2: Anschlags- und Verriegelungselement
- 17.3: Anschlags- und Verriegelungselement
- 18.1: Anschlags- und Verriegelungselement
- 18.2: Anschlags- und Verriegelungselement
- 19: Ausnehmung
- 20: zweite Stellung
- 30: erste Anströmungsrichtung
- 40: zweite Anströmungsrichtung
- 41: Strömungsprofil
- 50: versenkbarer Bolzen
- 51: Bolzenantrieb
- 52: Anschlagsfläche
- 53: Bohrung
- 55: Tragbalken
- 56: erster Pfosten
- 57: zweiter Pfosten
- 60: Gewässergrund
- 61: Wasseroberfläche
- 70: Gelenkachse
- 70.1: erste Drehachse
- 70.2: zweite Drehachse
- 70.3: dritte Drehachse
- 80: Kraftwirklinie
- 90: Vortriebskraft
- 100: Unterwasserkraftwerk
- a: seitlicher Versatz
- a₁: erster seitlicher Versatz
- a₂: zweiter seitlicher Versatz

## Patentansprüche

1. Verfahren zum Betrieb eines Unterwasserkraftwerks mit einer Stützstruktur (1), wenigstens einer elektrischen Maschine (2), die generatorisch und motorisch betreibbar ist, wenigstens einer Turbine (3), die mittels eines Abstandselements (4) an einer Drehgelenkverbindung (5) der Stützstruktur (1) befestigt ist und die in wenigstens mittelbarer Triebverbindung zur elektrischen Maschine (2) steht, wobei beim generatorischen Betrieb der elektrischen Maschine (2) die Turbine (3) von der umgebenden Wasserströmung angetrieben wird und
1.1 wobei die Turbine (3) und das Abstandselement (4) als Einheit aus einer ersten Stellung (10) in eine zweite Stellung (20) um die Gelenkachse (70) geschwenkt werden;
**dadurch gekennzeichnet, dass**
1.2 das Drehmoment zur Ausführung der Schwenkbewegung durch den Antrieb der Turbine (3) mittels der elektrischen Maschine (2) im motorischen Betrieb bewirkt wird.

2. Verfahren nach Anspruch 1, **dadurch gekennzeichnet, dass** die Turbine (3) eine Tangentialkraftkomponente (9) erzeugt, die senkrecht zur Verbindungslinie zwischen dem Ort der Krafteinleitung der Turbine (3) am Abstandselement (4) und dem Drehpunkt für die Schwenkbewegung an der Drehgelenkverbindung (5) verläuft.

3. Verfahren nach wenigstens einem der Ansprüche 1 oder 2, **dadurch gekennzeichnet, dass** die erste Stellung (10) und die zweite Stellung (20) durch mechanische Anschläge festgelegt werden, die die Schwenkbewegung der Einheit aus Turbine (3) und Abstandselement (4) beschränken.

4. Verfahren nach Anspruch 3, **dadurch gekennzeichnet, dass** wenigstens einer der mechanischen Anschläge aus dem Schwenkbereich der Einheit aus Turbine (3) und Abstandselement (4) herausbewegt werden kann.

5. Verfahren nach wenigstens einem der vorausgehenden Ansprüche,
**dadurch gekennzeichnet, dass** ein Bremselement vorgesehen ist, das beim Ausführen des Schwenkens ein gegen das Schwenken wirkendes Bremsmoment erzeugt.

6. Verfahren nach Anspruch 5, **dadurch gekennzeichnet, dass** das Bremsmoment gesteuert oder geregelt wird.

7. Verfahren nach Anspruch 6, **dadurch gekennzeichnet, dass** bei einer Schwenkbewegung von einer ersten Stellung in eine zweite Stellung die zweite Stellung dann erreicht wird, wenn das Bremsmoment das Schwenkmoment übersteigt.

8. Verfahren nach wenigstens einem der vorhergehenden Ansprüche,
**dadurch gekennzeichnet, dass** nach dem Ausführen der Schwenkbewegung eine gegen eine Rückbewegung absichernde Verriegelung erfolgt.

9. Verfahren nach wenigstens einem der vorhergehenden Ansprüche,
**dadurch gekennzeichnet, dass** die Gelenkachse (70) vertikal oder horizontal verläuft.

10. Verfahren nach wenigstens einem der vorhergehenden Ansprüche,
**dadurch gekennzeichnet, dass** die Schwenkbewegung als Vor- und Zurückbewegungen zwischen einer ersten Stellung (10), bei der die Turbine (3) für eine erste Anströmungsrichtung (30) ausgerichtet ist, und einer zweiten Stellung (20), bei der die Turbine (3) für eine zweite Anströmungsrichtung (40) ausgerichtet ist, ausgeführt wird.

11. Verfahren nach wenigstens einem der vorhergehenden Ansprüche,
**dadurch gekennzeichnet, dass** die Schwenkbewegung bis zu einer Wartungs- oder Neutralstellung geführt wird.

12. Unterwasserkraftwerk umfassend eine Stützstruktur (1), wenigstens eine Turbine (3) und wenigstens eine elektrische Maschine (2), die generatorisch und motorisch betreibbar ist und die mit der Turbine (3) in wenigstens mittelbarer Triebverbindung steht,
12.1 wobei zwischen der Turbine (3) und der Stützstruktur (1) ein Abstandselement (4) vorgesehen ist, und
12.2 wobei an einem Ende des Abstandselements (4) die Turbine angebracht ist und am anderen Ende eine Drehgelenkverbindung (5) zur Stützstruktur (1) besteht;
**dadurch gekennzeichnet, dass**
12.3 der Anlenkpunkt der Drehgelenkverbindung (5) eine Exzentrizität in Form eines seitlichen Versatzes (a) zur Kraftwirklinie der Vortriebskraft (13) aufweist, die beim Antrieb der Turbine (3) mittels der elektrischen Maschine (2) im motorischen Betrieb entsteht.

13. Unterwasserkraftwerk nach Anspruch 12, **dadurch gekennzeichnet, dass** die elektrische Maschine (2) in das Abstandselement (4) integriert ist.

14. Unterwasserkraftwerk nach einem der Ansprüche 12 oder 13, **dadurch gekennzeichnet, dass** es wenigstens ein Anschlags- und Verriegelungselement (17.1, 17.2, 17.3) umfasst, das als mechanischer Anschlag für die Schwenkbewegung der Einheit aus Turbine (3) und Abstandselement (4) dient und bei Anlage der Einheit am mechanischen Anschlag eine Verriegelung vornimmt.

15. Unterwasserkraftwerk nach Anspruch 14, **dadurch gekennzeichnet, dass** dem Anschlags- und Verriegelungselement (17.1, 17.2, 17.3) eine Dämpfungsvorrichtung zugeordnet ist.

16. Unterwasserkraftwerk nach wenigstens einem der Ansprüche 12 bis 15, **dadurch gekennzeichnet, dass** eine Bremsvorrichtung vorgesehen ist, die eine gegen die Schwenkbewegung wirkende Bremskraft erzeugt.

17. Unterwasserkraftwerk nach Anspruch 16, **dadurch gekennzeichnet, dass** die Bremsvorrichtung eine gesteuerte oder geregelte Bremskraft erzeugt.

18. Unterwasserkraftwerk nach wenigstens einem der Ansprüche 12 bis 17, **dadurch gekennzeichnet, dass** beim Vorliegen eines Strömungsprofils (41) an der Turbine (3) der seitliche Versatz (a) so gewählt wird, dass die gemittelte Kraftwirklinie der Turbinenkraft im generatorischen Betrieb (14) im Wesentlichen durch die Drehgelenkverbindung (5) läuft.

19. Unterwasserkraftwerk nach wenigstens einem der Ansprüche 12 bis 18, **dadurch gekennzeichnet, dass** zur Ausbalancierung des durch die Gewichtskraft der Turbine (3) und des Abstandselements (4) und der darin aufgenommenen Komponenten bewirkten statischen Drehmoments um die Gelenkachse (70) der Drehgelenkverbindung (5) ein Gegengewicht (12) verwendet wird.

20. Unterwasserkraftwerk nach wenigstens einem der Ansprüche 12 bis 19, **dadurch gekennzeichnet, dass** wenigstens zwei Turbinen (3) wenigstens mittelbar miteinander und mit einer gemeinsamen Stützstruktur (1) verbunden sind.

21. Unterwasserkraftwerk nach Anspruch 20, **dadurch gekennzeichnet, dass** die wenigstens zwei Turbinen (3) über ein Element mit einer zugeordneten Achse verbunden sind, die mit der Gelenkachse (70) zusammenfällt.

22. Unterwasserkraftwerk nach wenigstens einem der Ansprüche 12 bis 21, **dadurch gekennzeichnet, dass** der Turbine (3) mehrere Drehgelenkverbindungen (5.1, 5.2, 5.3) zugeordnet sind und die Turbine (3) zu jeder Drehgelenkverbindung (5.1, 5.2, 5.3) eine exzentrische Anlenkung aufweist.

## Claims

1. A method for operating an underwater power station, comprising a support structure (1), at least one electric machine (2) which can be operated as a generator or motor, at least one turbine (3) which is fastened by means of a spacer element (4) to a pivot joint (5) of the support structure and which is in an at least indirect drive connection with the electric machine (2), with the turbine (3) being driven by the ambient water current when the electric machine (2) is operated as a generator, and
1.1 with the turbine (3) and the spacer element (4) being pivoted as a unit from a first position (10) to a second position (20) about the joint axis (70) **characterized in that**
1.2 the torque for performing the pivoting movement being caused by the drive of the turbine (3) by means of the electric machine (2) in motive operation.

2. A method according to claim 1, **characterized in that** the turbine (3) generates a tangential force component (9) which extends perpendicularly to the connecting line between the place of introduction of force of the turbine (3) on the spacer element (4) and the fulcrum for the pivoting movement on the pivot joint (5).

3. A method according to at least one of the claims 1 or 2, **characterized in that** the first position (10) and the second position (20) are determined by mechanical stops which limit the pivoting movement of the unit of turbine (3) and spacer element (4).

4. A method according to claim 3, **characterized in that** at least one of the mechanical stops can be moved out of the pivoting range of the unit consisting of turbine (3) and spacer element (4).

5. A method according to at least one of the preceding claims, **characterized in that** a braking element is provided which when the pivoting is performed will generate a braking moment acting against the pivoting.

6. A method according to claim 5, **characterized in that** the braking moment is controlled or adjusted.

7. A method according to claim 6, **characterized in that** in the case of a pivoting movement from a first position to a second position the second position is reached when the braking moment exceeds the pivoting moment.

8. A method according to at least one of the preceding claims, **characterized in that** after the performance of the pivoting movement there will a latching which secures against rearward movement.

9. A method according to at least one of the preceding claims, **characterized in that** the joint axis (70) extends vertically or horizontally.

10. A method according to at least one of the preceding claims, **characterized in that** the pivoting movement is performed as a forward and rearward movement between a first position (10) in which the turbine (3) is aligned for a first inflow direction (30) and a second position (20) in which the turbine (3) is aligned for a second inflow direction (40).

11. A method according to at least one of the preceding claims, **characterized in that** the pivoting movement is performed up to a maintenance or neutral position.

12. An underwater power station, comprising a support structure (1), at least one turbine (3) and at least one electric machine (2) which can be operated as a generator or motor and which is in an at least indirect drive connection with the turbine (3),
12.1 there being a spacer element (4) provided between the turbine (3) and the support structure (1),
12.2 with the turbine being attached to one end of the support element (4), and there is a pivot joint (5) to the support structure (1) at the other end, **characterized in that**
12.3 the linkage point of the pivot joint (5) having an eccentricity in the form of a lateral offset (a) to the force action line of the propulsive power (13) which arises during the drive of the turbine (3) by means of the electric machine (2) in motive operation.

13. An underwater power station according to claim 12, **characterized in that** the electric machine (2) is integrated in the spacer element (4).

14. An underwater power station according to one of the claims 12 or 13, **characterized in that** it comprises at least one stop or locking element (17.1, 17.2, 17.3) which is used as a mechanical stop for the pivoting movement of the unit consisting of turbine (3) and spacer element (4) and which is made to lock when the unit comes to lie on the mechanical stop.

15. An underwater power station according to claim 14, **characterized in that** a damping apparatus is associated with the stop and locking element (17.1, 17.2, 17.3).

16. An underwater power station according to at least one of the claims 12 to 15, **characterized in that** a braking apparatus is provided which generates a braking force acting against the pivoting movement.

17. An underwater power station according to claim 16, **characterized in that** the braking apparatus generates a controlled or regulated braking force.

18. An underwater power station according to at least one of the claims 12 to 17, **characterized in that** when a flow profile (41) is present on the turbine (3) the lateral offset (a) is chosen in such a way that the averaged force action line of the turbine force in generator operation (14) extends substantially through the pivot joint (5).

19. An underwater power station according to at least one of the claims 12 to 18, **characterized in that** a counterweight (12) is used for balancing out the static torque about the joint axis (70) of the pivot joint (5), which static torque is caused by the weight of the turbine (3) and the spacer element (4) and the components received therein.

20. An underwater power station according to at least one of the claims 12 to 19, **characterized in that** at least two turbines (3) are connected with each other in an indirect way and with a common support structure (1).

21. An underwater power station according to claim 20, **characterized in that** the at least two turbines (3) are connected through an element with an associated axis which coincides with the joint axis (70).

22. An underwater power station according to at least one of the claims 12 to 21, **characterized in that** the turbine (3) is associated with several pivot joints (5.1, 5.2, 5.3) and the turbine (3) has an eccentric linkage to each pivot joint (5.1, 5.2, 5.3).

## Revendications

1. Procédé de fonctionnement d'une centrale immergée comportant une structure d'appui (1), au moins une machine électrique (2), pouvant fonctionner sur générateur et sur moteur, au moins une turbine (3), qui est fixée par le biais d'un élément d'écartement (4) à une articulation tournante (5) de la structure d'appui (1) et qui assure une liaison motrice avec la machine électrique (2) au moins indirectement, la turbine (3) étant entraînée par le courant marin environnant dans le cas d'un fonctionnement de la machine électrique (2) sur générateur et
1.1 la turbine (3) et l'élément d'écartement (4) pouvant pivoter d'un seul tenant autour de l'axe d'articulation et passer d'une première position (10) à une seconde position (20);
**caractérisé en ce que**
1.2 le couple de rotation permettant d'exécuter le mouvement de pivotement est induit par le système d'entraînement de la turbine (3) par le biais de la machine électrique (2) alors en fonctionnement sur moteur.

2. Procédé selon la revendication 1, **caractérisé en ce que** la turbine (3) génère une composante de force tangentielle (9) s'étendant à la verticale de la ligne de raccordement entre le site d'introduction des forces de la turbine (3) au niveau de l'élément d'écartement (4) et le point de rotation prévu pour le mouvement de pivotement au niveau de l'articulation tournante (5).

3. Procédé selon l'une au moins des revendications 1 ou 2, **caractérisé en ce que** la première position (10) et la seconde position (20) sont définies par des butées mécaniques, qui limitent le mouvement de pivotement de l'unité que constituent la turbine (3) et l'élément d'écartement (4).

4. Procédé selon la revendication 3, **caractérisé en ce que** l'on peut dégager au moins l'une des butées mécaniques de la zone de pivotement de l'unité que constituent la turbine (3) et l'élément d'écartement (4).

5. Procédé selon l'une quelconque au moins des revendications précédentes, **caractérisé en ce qu'**un élément de freinage est prévu pour générer un couple de freinage venant s'opposer audit pivotement pendant le mouvement de pivotement.

6. Procédé selon la revendication 5, **caractérisé en ce que** l'on peut contrôler ou réguler le couple de freinage.

7. Procédé selon la revendication 6, **caractérisé en ce que** l'on passe à la seconde position pendant un mouvement de pivotement d'une première position vers une seconde position lorsque le couple de freinage dépasse le couple de pivotement.

8. Procédé selon l'une au moins des revendications précédentes, **caractérisé en ce que** l'on procède à un verrouillage empêchant tout mouvement de rappel après l'exécution du mouvement de pivotement.

9. Procédé selon l'une au moins des revendications précédentes, **caractérisé en ce que** l'axe d'articulation (70) s'étend verticalement ou horizontalement.

10. Procédé selon l'une au moins des revendications précédentes, **caractérisé en ce que** le mouvement de pivotement fait office de mouvement de va-et-vient entre une première position (10), dans laquelle la turbine (3) est disposée pour une première direction du courant entrant (30) et une seconde position (20), dans laquelle la turbine (3) est disposée pour une seconde direction du courant entrant (40).

11. Procédé selon l'une au moins des revendications précédentes, **caractérisé en ce que** le mouvement de pivotement se poursuit pour atteindre une position d'entretien ou une position neutre.

12. Centrale immergée comportant une structure d'appui (1), au moins une turbine (3) et au moins une machine électrique (2), pouvant fonctionner sur générateur et sur moteur et qui assure une liaison motrice avec la turbine (3) au moins indirectement,
12.1 un élément d'écartement (4) palier étant prévu entre la turbine (3) et la structure d'appui (1), et
12.2 la turbine étant installée à une extrémité de l'élément d'écartement (4) et une articulation tournante (5) étant prévue à l'autre extrémité pour la structure d'appui (1);
**caractérisée en ce que**
12.3 le point d'articulation de l'articulation tournante (5) présente une excentricité sous forme de déport latéral (a) en direction de la ligne d'action de la force de propulsion (13), qui apparaît lorsque l'on entraîne la turbine (3) à l'aide de la machine électrique (2) en fonctionnement sur moteur.

13. Centrale immergée selon la revendication 12, **caractérisée en ce que** la machine électrique (2) est intégrée dans l'élément d'écartement (4).

14. Centrale immergée selon l'une quelconque des revendications 10 ou 13, **caractérisée en ce qu'**elle comprend au moins un élément de butée et de verrouillage (17.1, 17.2, 17.3), servant de butée mécanique pour mouvement de pivotement de l'unité que constituent la turbine (3) et l'élément d'écartement (4) et effectue un verrouillage lorsque l'unité repose contre de la butée mécanique.

15. Centrale immergée selon la revendication 14, **caractérisée en ce qu'**un dispositif d'amortissement est associé à l'élément de butée et de verrouillage (17.1, 17.2, 17.3).

16. Centrale immergée selon l'une quelconque des revendications 12 à 15, **caractérisée en ce qu'**un dispositif de freinage est prévu pour générer une force de freinage s'opposant au mouvement de pivotement.

17. Centrale immergée selon la revendication 16, **caractérisée en ce que** le dispositif de freinage génère une force de freinage contrôlée ou régulée.

18. Centrale immergée selon l'une quelconque des revendications 12 à 17, **caractérisée en ce que** l'on sélectionne le déport latéral (a) en présence d'un profil d'écoulement (41) au niveau de la turbine (3) de telle sorte que la ligne d'action de la force de turbine moyennée passe en fonctionnement sur générateur (14) sensiblement par l'articulation tournante (5).

19. Centrale immergée selon l'une quelconque des revendications 12 à 18, **caractérisée en ce que**, pour contrebalancer le couple de rotation statique agissant à travers la force de pesanteur de la turbine (3), de l'élément d'écartement et des composants logés à l'intérieur, l'on utilise un contrepoids (12) autour de l'axe d'articulation (70) de l'articulation tournante (5).

20. Centrale immergée selon l'une quelconque des revendications 12 à 19, **caractérisée en ce qu'**au moins deux turbines (3) sont reliés au moins indirectement l'une à l'autre et à une structure d'appui commune (1).

21. Centrale immergée selon la revendication 20, **caractérisée en ce que** lesdites au moins deux turbines (3) sont reliées à un axe associé par le biais d'un élément coïncidant à l'axe d'articulation (70).

22. Centrale immergée selon l'une quelconque des revendications 12 à 21, **caractérisée en ce que** plusieurs articulations tournantes (5.1, 5.2, 5.3) sont associés à la turbine et que la turbine (3) présente une liaison excentrique avec chaque articulation tournante (5.1, 5.2, 5.3).
